Europäisches Patentamt

European Patent Office

Office européen des brevets

(19)

(11) Publication number: **0 392 786**
**A2**

# (12) EUROPEAN PATENT APPLICATION

(21) Application number: **90303802.4**

(22) Date of filing: **09.04.90**

(51) Int. Cl.5: **C08L 75/04, C08K 3/10**

(30) Priority: **14.04.89 US 339288**

(43) Date of publication of application:
**17.10.90 Bulletin 90/42**

(84) Designated Contracting States:
**BE DE ES FR GB IT NL**

(71) Applicant: **ARCO CHEMICAL TECHNOLOGY INC.**
**3 Christina Centre Suite 902 201 N Walnut Street**
**Wilmington Delaware 19801(US)**

(72) Inventor: **Usama, E. Younes**
**C27 Hollybrook**
**Newtown Square, Pennsylvania 19073(US)**

(74) Representative: **Cropp, John Anthony David et al**
**MATHYS & SQUIRE 10 Fleet Street**
**London, EC4Y 1AY(GB)**

(54) **Flame-retardant polyurethane composition.**

(57) Polyurethane foams having improved flame retardant properties employing small quantities of chlorinated polyvinyl chloride and flame-retardant synergist, such as antimony trioxide, $Sb_2O_3$, and antimony pentoxide, $Sb_2O_5$, arsenic trioxide, arsenic pentoxide, zinc sulfate, zinc oxide, zinc borate, bismuth oxide, molybdenum oxide, tungsten oxide, stannous oxide, and mixtures thereof. Small quantities of melamine may also be present. The additives may be suspended in the polyol prior to reaction with a polyisocyanate in the presence of a polyurethane catalyst in a conventional manner to produce improved polyurethane foams. Because very small quantities of the additives are used, the physical properties of the foams are not adversely affected by their presence.

EP 0 392 786 A2

## FLAME-RETARDANT POLYURETHANE COMPOSITION

Field of the Invention

The invention relates to polyurethane foams and methods for their preparation and, in one aspect, more particularly relates to polyurethane foams having enhanced flame retardant properties through the use of additives.

Background of the Invention

Polyurethane foams, formed by the reaction of a polyisocyanate with a polyhydroxyl-containing compound in the presence of a suitable catalyst, are widely accepted as padding materials for cushions in furniture, automobiles and the like. Such foams typically burn readily, and considerable effort has been devoted to reducing the flammability of the foams. One technique by which this may be done is through the use of additives to the foam that retard its flammability or help to extinguish the burning foam should it ignite. Known flame retardant additives include 2,3-dibromo-1,4-butenediol; tris (2 -chloroethyl)-phosphate and triethylphosphate, for example. However, a disadvantage of using the phosphate-containing additives is that often relatively large quantities of the expensive materials must be used, higher than about 1%. Additionally, phosphorus and halogen-containing flame retardants create a plasticizing effect which causes the polyurethane foam to be reduced in hardness, lower in compressive strength and increased in density so that the foam is detrimentally affected. Ideally, the load bearing properties of the foams, such as ILD - indentation load deflection and CFD - compression force deflection, should not be adversely affected by the presence of the additive. These conventional flame retardants are also somewhat volatile and may evaporate out of the polyurethane foam over time, thus decreasing the available fire retardancy. Finally, there are indications that these materials may be corrosive to certain metals on which the foams are applied.

Considerable research has been conducted on flame retardant additives for polyurethane foams. For example, U.S. Pat. No. 4,221,875 describes flame resistant and non-corrosive polyurethane foams made by foaming a raw material mixture comprising a polyhydroxyl compound, polyisocyanate, blowing agent, etc., to be carried out in the presence of melamine powder added thereto as a novel flame retardant. See also UK Patent Application GB 2,177,405A which relates to flame-retardant polyurethane foams prepared by reacting a polyoxyalkylene polyether polyol with an organic polyisocyanate and a blowing agent in a process where melamine is incorporated as the sole flame retardant compound. The amount of melamine ranges from 10 wt.% to 55 wt.% of the total composition. UK Patent Application GB 2,177,406A is similar to GB 2,177,405A, except that another flame retardant is also used in combination with the melamine, where the other flame retardant may include tris(beta-chloroethyl)phosphate, pentabromodiphenyl oxide, tris(2,3-dibromopropyl)phosphate and tris(beta-chloropropyl)phosphate.

It is further well known to use chlorinated polyvinyl chloride in polyurethane compositions. Studies of the miscibility of blends of these systems are reported in D. Garcia, "Blends of a Chlorinated Poly(Vinyl Chloride) (CPVC) with a Polyurethane," Polymer Preparations, Vol. 27, No. 1, 1986, pp. 259-60; D. Garcia, "Blends of a Chlorinated Poly(vinyl Chloride) with a Polyurethane," Journal of Polymer Science, Vol. 24, 1986, pp. 1577-1586; and D. Garcia, "Blends of a Chlorinated Poly(Vinyl Chlor ide) (CPVC) with a Polyurethane," Polymer Preparations, Vol. 28, No. 1, 1986, pp. 120-1. It is noted that, since these are miscibility studies, the proportion of chlorinated polyvinyl chloride to urethane is very high, often over 50%.

A curable urethane adhesive composition having a high green strength that is a mixture of an isocyanate terminated ricinoleate prepolymer and chlorinated polyvinyl chloride curable by reaction with compounds having reactive hydrogens such as water, amines, polyols, urethanes, ureas and the like is described in U.S. Pat. No. 4,340,682 to Legue, et al. Similarly U.S. Pat. No. 4,569,972, also to Legue, et al., discloses an adhesive composition made of a solution in a suitable solvent of a ricinoleate urethane polyol and a chlorinated polyvinyl chloride in which the chlorinated polyvinyl chloride represents no more than approximately 90% by weight of the combined polyol and chlorinated polyvinyl chloride. Again, in both of these patents, the proportion of CPVC to urethane is relatively high.

Chlorinated polyvinyl chloride is also known to be used in polyurethane compositions to affect the viscosity. In Chemical Abstracts 106(6):34713g (1986), the viscosity of polypropylene glycol-TDI-trimethylol-propane copolymer and chlorinated polyvinyl chloride coating systems containing diluent plasticizers and polyols depended on the chemical nature of the diluents and on the content of the chlorinated polyvinyl chloride modifier. The incorporation of greater than 15% chlorinated polyvinyl chloride into a polyurethane film-forming composition comprising a copolymer of THF, propylene oxide, trimethylolpropane and TDI decreased (1) the curing time from 12 to 6-9 hours, (2) the gel-fraction content from 97 to 77-84%, (3) the relative hardness from 0.51 to 0.42-0.45, (4) the impact strength by approximately 5-20 x $10^{-2}$kg-m, (5) as well as elasticity, but increased (1) the wear by approximately 58-90 x $10^{-5}$kg/m²-m, (2) the tensile strength, and (3) and the resistance of the composition to the action of 20% aq. $HNO_3$, NaOH and water, according to Chemical Abstracts 95(22):188122e (1980). The recitation in Chemical Abstracts 92(26):216307c (1980) may also be of interest. The abstract describes a composition of 100 parts NCO-terminated polyurethane and 10-50 parts 20-40% chlorinated polyvinyl chloride solution in ethyl acetate which additionally contains 5-20 parts polyisocyanate and 1-10 parts ethyoxylated alkylphenol for improved shelf life and for increased strength of the adhesive bond.

A known material for improving flammability in plastics is antimony trioxide, $Sb_2O_3$.

"The most useful material imparting flame retardance to plastics is antimony trioxide. It must be used with a source of available chlorine to be effective; it is presumed that antimony oxychloride is the active flame-retarding agent." F. W. Billmeyer, Jr., Textbook of Polymer Science, Wiley/-Interscience, New York, 1971, p. 502, referring to J. A. Holderried, "Flame retardants," p. 274, 276, 288, 290 in Sidney Gross, ed., Modern Plastics Encyclopedia 1969-1970 (McGraw-Hill Book Co., New York), Vol. 46, No. 10A, October, 1969.

Antimony pentoxide, $Sb_2O_5$, is also known as a flame retardant for textiles. See N. Irving Sax, et al., Hawley's Condensed Chemical Dictionary, Eleventh Edition, Van Nostrand Reinhold, New York, 1987, p. 91.

Also of interest is U.S. Patent No. 4,711,941, which relates to a moldable composition having a novel random bromostyrene-containing copolymer, a thermoplastic resin, preferably polycarbonate, and a flame-retardant synergist. The list of suitable synergists in cludes antimony trioxide, antimony pentoxide, arsenic trioxide, arsenic pentoxide, zinc sulfate, zinc oxide, zinc borate, bismuth oxide, molybdenum oxide, tungsten oxide, stannous oxide, and their mixtures, with antimony trioxide being the preferred synergist.

Nonetheless, flammability of polyurethane foams continues to be an important issue, and improvements in this area are always sought after. While additives are useful in this regard, as noted, many must be used in such large quantities that the resulting foam characteristics are degraded.


Summary of the Invention


Accordingly, it is an object of the present invention to provide a polyurethane foam composition having improved flame retardant characteristics.

It is another object of the present invention to provide a flame retardant polyurethane foam using additives that may be easily incorporated into conventional foam formulations.

Still another object of the present invention is to provide a flame retardant polyurethane foam that does not have many of the disadvantages of conventional flame retardants, and which does not adversely affect the physical properties of the polyurethane foam.

In carrying out these and other objects of the invention, there is provided, in one aspect, a fire retardant polyurethane composition comprising the reaction product of a polyol with a polyisocyanate in the presence of a polyurethane catalyst, and further in the presence of chlorinated polyvinyl chloride and an antimony oxide.


Detailed Description of the Invention


It has been discovered that a polyurethane foam composition that is composed of a conventional polyether polyol, polyisocyanate and a cross linker or catalyst, may have its flame retarding characteristics improved by incorporating into the polyurethane foam formulation a matrix resin of chlorinated polyvinyl chloride and a flame-retardant synergist, such as antimony trioxide or antimony pentoxide, in sufficient amounts. However, it has also been surprisingly discovered that these additives need only be present in relatively small amounts. A synergistic effect between the chlorinated polyvinyl chloride and the synergist is expected to be occurring. The polyurethane foam may be any conventional flexible foam, including molded or free-rising slab foams. This is additionally a surprising finding, since it is typically not as easy to flame retard slab polyurethane foams as molded polyurethane foams. This difference in ability to impart flame retardant characteristics is apparently due to the material morphology resulting from the different polyols used in the two types of foams.

Suitable synergists include antimony trioxide, antimony pentoxide, arsenic trioxide, arsenic pentoxide, zinc sulfate, zinc oxide, zinc borate, bismuth oxide, molybdenum oxide, tungsten oxide, stannous oxide, and mixtures thereof; antimony trioxide and antimony pentoxide being the preferred synergists, with antimony trioxide being especially preferred.

The chlorinated polyvinyl chloride (CPVC) and the synergist may be employed in a powder form and, in one aspect, may be suspended in the polyol prior to foaming to give a CPVC polymer polyol. The CPVC may contain from about 58 to about 72% chloride, preferably from about 60 to about 70%. The synergist may be antimony trioxide, $Sb_2O_3$, or antimony pentoxide, $Sb_2O_5$, although others may be used. By way of example only, antimony oxide will be taken to be the synergist. The CPVC may be present in the formulation in an amount ranging from about 1 pph to about 10 pph, more preferably in a range from about 2.5 pph to about 5 pph. The antimony oxide may be present in the formulation in an amount ranging from about 0.1 pph to about 10 pph, more preferably in a range from about 0.5 pph to about 5 pph. It has also been discovered that melamine may be present in the polyurethane foam formulation of the present invention to further improve its flame retarding properties. The melamine may also be added, in the form of a powder, in an amount ranging from about 5 to about 60 wt.%, based on all of the components in the foam.

In accordance with this invention, a variety of polyether polyols may be used to make the polyurethane foams. These include both ethylene oxide (EO) capped and polyols not capped with EO. In one aspect, the polyol preferably has a molecular weight of from about 2000 to 6500, and is typically made by the reaction of an initiator having a plurality of reactive hydrogens thereon with one or more alkylene oxides. Suitable initiators include, but are not limited to, glycerin, alkanolamines, alkylamines, aryl or aromatic amines, sucrose, sorbitol, trimethylol propane (TMP), α-methylglucoside, β-methylglucoside or other methyl-glucoside, resins of phenol, aniline and mixed phenol aniline, such as methylenedianiline or bisphenol A, Mannich condensates and mixtures thereof, for example. The base polyol may be made by alkoxylating the initiator with a desired number of moles of an alkylene oxide. Preferably, the alkylene oxide has two to four carbon atoms, and is thus, ethylene oxide, propylene oxide, butylene oxide or mixtures of these oxides. The oxides may be mixed upon addition, or may be added to the polyol initiator chain separately to form blocks or caps. In one aspect, a mixture of ethylene oxide and propylene oxide is added to the initiator. The alkoxylation may or may not be catalyzed; KOH is a commonly used catalyst, although others may be employed. For example, double metal cyanide catalysts may be employed, in particular zinc hexacyanocobaltate, and the polyols may be prepared in accordance with the methods described in U.S. Pat. Nos. 3,029,505; 3,900,518; 3,941,049 and 4,355,100, incorporated by reference herein. Alternatively, various polymer polyols may also be employed as completely replacing or in conjunction with suitable polyol components.

A catalyst is typically employed in preparing polyurethane foams in the conventional manner. Such catalyst may include one or more of the following:

(a) Tertiary amines such as trimethylamine, triethylamine, N-methylmorpholine, N-ethylmorpholine, N,N-dimethylbenzylamine, N,N-dimethylethanolamine, N,N,N′,N′-tetramethyl-1,3-butanediamine, N,N-dimethylpiperazine, 1,4-diazobicyclo[2.2.2]octane and the like;

(b) Tertiary phosphines such as trialkylphosphines, dialkylbenzylphosphines, and the like;

(c) Strong bases such as alkali and alkaline earth metal hydroxides, alkoxides, and phenoxides;

(d) Acidic metal salts of strong acids such as ferric chloride, stannic chloride, stannous chloride, antimony trichloride, bismuth nitrate and chloride, and the like;

(e) Chelates of various metals such as those which can be obtained from acetylacetone, benzoylacetone, trifluoroacetyl acetone, ethyl acetoacetate, salicyclaldehyde, cyclopentanone-1-carboxylate, acetylacetoneimine, bisacetylacetonealkylenediamines, salicyclaldehydeimine, and the like, with various metals such as Be, Mg, Zn, Cd, Pd, Ti, Zr, Sn, As, Bi, Cr, Mo, Mn, Fe, Co, and Ni;

(f) Alcoholates and phenolates of various metals such as Ti(OR)$_4$, Sn(OR)$_4$, Al(OR)$_3$, and the like, wherein R is alkyl or aryl, and the reaction products of alcoholates with carboxylic acids, beta-diketones, and 2-(N,N-dialkylamino)alkanols;

(g) Salts of organic acids with a variety of metals such as alkali metals, alkaline earth metals, Al, Sn, Pb, Mn, Co, Ni and Cu, including, for example, sodium acetate, stannous octoate, stannous oleate, lead octoate, metallic driers such as manganese and cobalt naphthenate, and the like; and

(h) Organometallic derivatives of tetravalent tin, trivalent and pentavalent As, Sb, and Bi and metal carbonyls of iron and cobalt.

Of course, combinations of any of the above polyurethane catalysts may be employed. Usually, the amount of catalyst employed ranges from about 0.01 to about 5.0 parts by weight percent based on 100 parts by weight of the polyol. More often the amount of catalyst used is 0.2 to 2.0 parts by weight.

The polyol component for the polyurethane foam is reacted in the presence of one or more of the above catalysts with a polyisocyanate according to conventional procedures. The polyisocyanate used may be any aromatic or aliphatic polyisocyanate, such as toluene diisocyanates (TDIs), polymeric isocyanates and aliphatic diisocyanates. Typical aromatic polyisocyanates include, but are not limited to, m-phenylene diisocyanate, p-phenylene diisocyanate, polymethylene polyphenyl-isocyanate, 2,4-toluene diisocyanate, 2,6-toluene diisocyanate, dianisidine diisocyanate, bitolylene diisocyanate, naphthalene-1,4-diisocyanate, diphenylene-4,4'-diisocyanate, aliphatic-aromatic diisocyanates, such as xylylene-1,4-diisocyanate, xylylene-1,2-diisocyanate, xylylene-1,3-diisocyanate, bis(4-isocyanatophenyl)-methane, bis(3-methyl-4-isocyanatophenyl)methane, and 4,4'-diphenylpropane diisocyanate. Suitable aliphatic diisocyanates would include isophorone diisocyanate, hexamethylene diisocyanate, and methylene-bis-cyclohexylisocyanate. Toluene diisocyanates are preferred, in one aspect of the invention.

Aromatic polyisocyanates suitable for use include methylene-bridged polyphenyl polyisocyanate mixtures which have a functionality of from about 2 to about 4. These latter isocyanate compounds are generally produced by the phosgenation of corresponding methylene bridged polyphenyl polyamines, which are conventionally produced by the reaction of formaldehyde and primary aromatic amines, such as aniline, in the presence of hydrochloric acid and/or other acidic catalysts.

Foaming is carried out in the presence of water and, optionally, additional organic blowing agents. The water is normally used in amounts of 0.5 to 15 parts by weight, preferably, 1.0 to 10 parts by weight (pbw) based on 100 pbw of the polymer polyol and any additional polyol present. The organic blowing agents optionally used along with the water are known in the art and are, for example, monofluorotrichloromethane, difluorodichloro-methane, methylene dichloride and others generally known in the art. Additives to regulate the cell size and the cell structure, for example, silicone surfactant such as dimethylpolysiloxanes, may also be added to the foaming mixture. In this invention, it is highly recommended that a relatively low activity surfactant and/or a reduced amount of a highly activity silicone be employed. Fillers, dyes or plasticizers of known types may also be used, of course. These and other additives are well known to those skilled in the art.

The fire retardant additives of the present invention would also be useful in the preparation of molded polyurethane foams. Molded polyurethane foams are prepared somewhat similarly to slab foams, except that they are cast in a mold, rather than allowed to rise freely. For more information on preparing polyurethanes, particularly flexible polyurethanes, see U.S. Pat. Nos. 4,338,408; 4,342,687 and 4,381,353, incorporated by reference herein. Conventional reaction conditions may be employed in making the polyurethane foams of this invention.

The practice of this invention is further demonstrated by the following examples.

Procedure:

The polyurethane foams were separately prepared by charging the amounts of polyol together with the flame retardant additives of this invention, if present; water; catalyst; surfactants; etc. indicated into a one-liter cylindrical container equipped with a mechanical stirrer. The mixture was stirred for about 30 seconds at about 2500 rpm, and the indicated amount of polyisocyanate was introduced into the container with stirring for about 10 seconds. The contents of the container were then immediately poured into a cardboard box and the foam was allowed to rise. After the foam rise was completed the foam was allowed to cure at room temperature for about one week.

EXAMPLE 1

The following example demonstrates the use of the CPVC/Sb$_2$O$_3$ system with a urethane molded high resiliency (HR) foam.

| Thanol SF-5505 Polyether Polyol | 120.00 g |
|---|---|
| Niax 34-28 Polymer Polyol | 80.00 g |
| H816S CPVC | 13.2 g |
| Antimony trioxide | 2.64 g |
| DC 5043 Silicone | 3.0 g |
| DEOA | 3.0 g |
| $H_2O$ | 8.0 g |
| BL11 Catalyst | 0.3 g |
| DABCO 33LV Catalyst | 1.00 g |
| TDI | 48.6 g |

The resulting foam which contained 5 parts per hundred (pph) CPVC and 1 pph $Sb_2O_3$ was cut and then burned according to the Cal 117 flammability test procedure, briefly described below. The results of the test were compared to those of a non-modified polyurethane foam which was otherwise identical. The modified foam was considerably less flammable.

| | CPVC/Urethane | Urethane Standard |
|---|---|---|
| After Flame Time (sec.) | 1 | 14.2 |
| Burn Through Time (sec.) | No burn through | 11 |
| Char Length (in.) | 2.5 | Total |

In addition, the following physical property characteristics of the foams were obtained:

| | Standard | CPVC Modified |
|---|---|---|
| Tensile Strength | 12.9 | 16.7 |
| % Elongation | 107 | 113 |
| Tear Strength | 1.4 | 1.4 |
| CFD 25% | 0.24 | 0.24 |
| CFD 40% | 0.3 | 0.37 |
| CFD 65% | 0.61 | 0.65 |

These results illustrate that combustion modification using CPVC blends can be obtained at no change in the mechanical properties of the foam.

EXAMPLE 2

The procedure of Example 1 was repeated except that only half the amount of CPVC and $Sb_2O_3$ was used to give a foam which contained 2.5 pph CPVC and 0.5 pph $Sb_2O_3$. The results of the Cal 117 test were:

| | CPVC/Urethane |
|---|---|
| After Flame Time (sec.) | 1 |
| Burn Through Time (sec.) | No burn through |
| Char Length (in.) | 3.2 |

In addition, mechanical property testing indicates that the CPVC modified foam had improved tensile properties as set out in the following data:

|  | Non-Modified | Modified |
|---|---|---|
| Tensile Strength | 12.9 | 16.5 |
| % Elongation | 107 | 131 |
| Tear Strength | 1.4 | 1.4 |
| CFD 25% | 0.24 | 0.21 |
| CFD 40% | 0.37 | 0.34 |
| CFD 65% | 0.61 | 0.58 |
| 25% R Stress | 0.2 | 0.16 |

Thus, even very small amounts of CPVC and antimony oxide impart greatly improved flame retardant characteristics with no degradation of other foam properties.

## EXAMPLE 3

The following example demonstrates the use of slab polyol in the formation of combustion modified foams.

|  | Standard | 3A | 3B |
|---|---|---|---|
| Thanol F-3020 | 100 | 100 | 100 |
| L-5770 Silicone | 0.75 | 0.75 | 0.75 |
| DEOA | 1.5 | 1.5 | 1.5 |
| UL-1 Catalyst | 0.01 | 0.01 | 0.01 |
| BL11 Catalyst | 0.1 | 0.1 | 0.1 |
| DABCO 33LV Catalyst | 0.35 | 0.35 | 0.35 |
| $H_2O$ | 4.0 | 4.0 | 4.0 |
| CPVC | 0 | 5 g (3.15%) | 2.5 (1.65%) |
| $Sb_2O_3$ | 0 | 1 g (0.61%) | 0.5 (0.31%) |
| Melamine | 0 | 0 | 0 |
| TDI | 52.1 | 52.1 | 52.1 |

The resulting foams which contained 0, 3.2 and 1.6% CPVC and 0, 0.6 and 0.3% $Sb_2O_3$, respectively, exhibited limiting oxygen indices (LOIs) of 21, 24 and 22, additionally, according to the ASTM LOI procedure (ANSI/ASTM D-2863-77), described briefly below. The Cal 117 test gave the following results:

|  | Standard | 3A | 3B |
|---|---|---|---|
| After Flame Time (sec.) | - | 2 | 11-28 |
| Burn Through Time (sec.) | 20 | None | 28 |
| Char Length (in.) | Total | 4 | 7 - Total |

These results indicate that a combustion modified foam may be obtained through the use of extremely low percentages of CPVC and $Sb_2O_3$ in urethanes.

## EXAMPLE 4

The following example demonstrates the use of CPVC and melamine additives to modify the flame retardance of polyurethane foams. The following formulations were foamed.

|  | Standard | CPVC Modified |
|---|---|---|
| Thanol F-3020 | 100 | 100 |
| L-5770 Silicone | 0.75 | 0.75 |
| DEOA | 1.5 | 1.5 |
| UL-1 Catalyst | 0.01 | 0.01 |
| BL11 Catalyst | 0.1 | 0.1 |
| DABCO 33LV Catalyst | 0.35 | 0.35 |
| $H_2O$ | 4.0 | 4.0 |
| CPVC | 0 | 5 |
| $Sb_2O_3$ | 0 | 1 |
| Melamine | 10 | 10 |
| TDI | 52.1 | 52.1 |

The resulting foams were burned according to the ASTM LOI procedure and were found to give LOIs of 21 and 24, respectively. The Cal 117 test gave the following results:

|  | CPVC Modified |
|---|---|
| After Flame Time (sec.) | 0 |
| Burn Through Time (sec.) | None |
| Char Length (in.) | 3 |

## EXAMPLE 5

The following example demonstrates the use of CPVC/molded polyol in the formation of a flame-modified foam composition. The following composition was mixed on a high speed mixer and poured into a mold.

|  | CPVC Modified |
|---|---|
| Thanol SF-5505 | 100 g |
| DC-5043 Silicone | 0.75 g |
| DEOA | 1.58 g |
| BL11 Catalyst | 0.15 g |
| DABCO 33LV Catalyst | 0.5 g |
| $H_2O$ | 4.0 |
| CPVC | 5.0 |
| $Sb_2O_3$ | 1.0 |
| UL-1 Catalyst | 0.01 |
| TDI | 48.7 |

The resulting foam was cut and the combustion characteristics were evaluated in accordance with the Cal 117 test procedure, which gave the following results:

|  | CPVC Modified |
|---|---|
| After Flame Time (sec.) | 0.75 |
| Burn Through Time (sec.) | 3.5 |
| Char Length (in.) | 24 |

## EXAMPLE 6

The procedure in Example 5 was repeated, except that Thanol 1343 was substituted for the Thanol SF-5505. The resulting foam gave the following flame retardant characteristics using the Cal 117 test:
After Flame Time (sec.) 0
Char Length (in.) 3.5
Burn Through Time (sec.) None, self-extinguishing

## GLOSSARY

BL11 Catalyst

Tertiary amine catalyst made by Air Products and Chemicals, Inc.

DABCO 33LV Catalyst

Tertiary amine catalyst made by Air Products and Chemicals, Inc.

DC 5043 Silicone

A silicone surfactant manufactured by Union Carbide Corp.

DEOA

Diethanolamine.

H816S CPVC

Chlorinated polyvinyl chloride containing 68% chlorine manufactured by Kuneka Chemical Co.

L-5770 Silicone

A silicone surfactant manufactured by Union Carbide Corp.

NIAX 34-28

A 28 hydroxyl no. polymer polyol made by Union Carbide Corp. using a 5,000 molecular weight ethylene oxide-capped polyol as the dispersing media, and which contains approximately 20 wt% polymerized acrylonitrile and styrene.

THANOL 1343

A 5000 molecular weight polyether polyol of propylene oxide and ethylene oxide having a hydroxyl number of 35, made by ARCO Chemical Co.

THANOL F-3020

A 3000 molecular weight flexible slab stock polyether polyol of propylene oxide having a hydroxyl number between 54-57, made by ARCO Chemical Co.

THANOL SF- 5505

A glycerin initiated polyether of propylene oxide and ethylene oxide with a hydroxyl number of 34 and a primary hydroxyl group content of 80% based on the total hydroxyl con tent of the polyether, made by ARCO Chemical Company.

UL-1 Catalyst

Organotin compound made by Witco Chemical Co.

Cal 117 Test

This test involves inserting a rectangle of cellular material, such as polyurethane foam, of the dimensions 12" x 3" x 0.5" into a flame of height 1.5". The burner flame is applied vertically at the middle of the lower edge of the specimen for 12 seconds.

The average char length for all specimens is not to exceed 6", while the maximum char length of any individual specimen is not to exceed 8". Char length is defined as the distance from the end of the specimen which was exposed to the flame to the upper edge of the void area.

The average afterflame time, including the afterflame of molten material or other fragments dropping from the specimen, is not to exceed 5 seconds. The maximum afterflame of any individual specimen is not to exceed 10 seconds.

The burn through time, not strictly part of the Cal 117 test, is the time required to completely burn through the sample from the time of application of the flame.

ASTM LOI Procedure

This test is more completely entitled "Standard Method for Measuring the Minimum Oxygen Concentration to Support Candle-like Combustion of Plastics (Oxygen Index)" (ANSI/ASTM D 2863-77). The oxygen index is defined as the minimum concentration of oxygen, expressed as volume percent, in a mixture of oxygen and nitrogen that will just support flaming combustion of a material initially at room temperature under the conditions of this method. The minimum concentration of oxygen in a mixture of oxygen and nitrogen flowing upward in a test column that will just support combustion is measured under equilibrium conditions of candle-like burning. The equilibrium is established by the relation between the heat generated from the combustion of the specimen and the heat lost to the surroundings as measured by one or the other of two arbitrary criteria, namely, a time of burning or a length of specimen burned. This point is approached from both sides of the critical oxygen concentration in order to establish the oxygen index (LOI). Obviously, the more oxygen that is required for burning, that is, the higher the LOI, the less flammable the specimen is.

For cellular materials, such as polyurethane foams, a specimen 12.5mm wide x 12.5mm thick x 125mm long is placed vertically in a vertically oriented glass tube having a mixture of oxygen and nitrogen injected in the bottom thereof. The amounts of oxygen and nitrogen can be independently controlled. The sample is ignited through the open top of the glass tube and the oxygen concentration of the gases flowing in through the bottom is not adjusted after igniting. The concentration of oxygen is too high and must be reduced if the foam specimen burns at least 3 minutes or 75mm. The test is run again with a different concentration until the defined minimum oxygen concentration is determined.

Many modifications may be made in the polyurethane compositions of this invention and their method of production without departing from the spirit and scope of the invention, which are defined only by the appended claims. For example, one skilled in the art could ad just the proportions and modes of addition within the parameters set forth to provide polyurethane foams with particularly advantageous properties.

**Claims**

1. A fire retardant polyurethane composition comprising the reaction product of a polyol with a polyisocyanate in the presence of a polyurethane catalyst, and further in the presence of a chlorinated polyvinyl chloride (CPVC) and a flame-retardant synergist selected from the group consisting of antimony trioxide, antimony pentoxide, arsenic trioxide, arsenic pentoxide, zinc sulfate, zinc oxide, zinc borate, bismuth oxide, molybdenum oxide, tungsten oxide, stannous oxide, and mixtures thereof.

2. The fire retardant polyurethane composition of claim 1 where the amount of CPVC ranges from about 1 to about 10 pph, and the amount of flame-retardant synergist ranges from about 0.1 to about 10 pph.

3. The fire retardant polyurethane composition of claim 1 where the amount of CPVC ranges from about 2.5 to about 5 pph, and the amount of flame-retardant synergist ranges from about 0.5 to about 5 pph.

4. The fire retardant polyurethane composition of any one of claims 1 to 3 where the flame-retardant synergist is an antimony oxide which is selected from antimony trioxide and antimony pentoxide.

5. The fire retardant polyurethane composition of any one of claims 1 to 4 where the chlorine content in the CPVC ranges from about 58 to about 72%.

6. The fire retardant polyurethane composition of any one of claims 1 to 5 where melamine is also present with the CPVC and the flame-retardant synergist in the reaction product.

7. The fire retardant polyurethane composition of claim 6 where the amount of melamine present ranges from about 5 to about 60 wt.%.

8. A method for making a fire retardant polyurethane foam comprising reacting a polyol with a polyisocyanate in the presence of a polyurethane catalyst, and further in the presence of a chlorinated polyvinyl chloride (CPVC) and a flame-retardant synergist selected from the group consisting of antimony trioxide, antimony pentoxide, arsenic trioxide, arsenic pentoxide, zinc sulfate, zinc oxide, zinc borate, bismuth oxide, molybdenum oxide, tungsten oxide, stannous oxide, and mixtures thereof.

9. The method of claim 8 where the amount of CPVC ranges from about 1 to about 10 pph, and the amount of flame-retardant synergist ranges from about 0.1 to about 10 pph, based on the total parts of the components reacted to make the foam.

10. The method of claim 8 where the amount of CPVC ranges from about 2.5 to about 5 pph, and the amount of flame-retardant synergist ranges from about 0.5 to about 5 pph, based on the total parts of the components reacted to make the foam.

11. The method of any one of claims 8 to 10 where the flame-retardant synergist is an antimony oxide which is selected from antimony trioxide and antimony pentoxide.

12. The method of any of of claims 8 to 11 where the chlorine content in the CPVC ranges from about 58 to about 72%.

13. The method of any one of claims 8 to 12 where melamine is also present with the CPVC and the flame-retardant synergist in the reaction.

14. The method of claim 13 where the amount of melamine present ranges from about 5 to about 60 wt.%, based on the total parts of all components in the polyurethane foam.

15. The method of any one of claims 8 to 14 where the CPVC and the flame-retardant synergist are suspended in the polyol prior to reaction of the polyol with the polyisocyanate.